# EUROPEAN PATENT SPECIFICATION

(11) **EP 1 967 990 B1**
(45) Date of publication and mention of the grant of the patent: **29.12.2010**
(21) Application number: 07004577.8
(22) Date of filing: 06.03.2007
(51) Int. Cl.: G06K 19/07, G06K 19/077

(54) **Adapter for a subscriber module of a mobile terminal**
Adapter für ein Teilnehmermodul eines mobilen Endgeräts
Adaptateur pour module d'un abonné dans un terminal mobile

(43) Date of publication of application: 10.09.2008
(73) Proprietor: Vodafone Holding GmbH, 40213 Düsseldorf (DE)
(72) Inventor: Montaner, Javier, 6211 GD Maastricht (NL); Koraichi, Najib, 6333 CT Schimmert (NL)
(74) Representative: Cullinane, Marietta Bettina

(56) References cited:
- EP-A1- 1 600 885
- WO-A-2004/019261
- FR-A- 2 888 974
- JP-A- 2002 279 377

## Description

The present invention relates to an adapter for a subscriber module of a mobile terminal.

Common mobile terminals are generally equipped with a subscriber module, such as a subscriber identity module (SIM) card or other universal integrated circuit card (UICC). The subscriber modules are provided with a contact area for establishing a contact for communication with the mobile equipment unit (ME) of the mobile terminal. The contact area is provided in particular at the chip integrated in the subscriber module.

In addition, some mobile terminals are equipped with communication means for communicating via short range systems such as near field communication systems (NFC). These terminals have to be provided with a special antenna for receiving and / or transmitting radio frequency RF-signals. For the usage of such improved mobile terminals, dual interface subscriber module cards have been developed, which comprise one contact interface and one contact-less interface for communication with the respective units within a mobile terminal, i.e. the ME and/or an RF-antenna. Such a dual interface card is for example described in DE 10 2004 046 845 A1.

In EP 1 600 885 A1 a SIM reader / writer and a mobile phone are described. The SIM reader/writer has an insertion opening in the shape of a slot for receiving the SIM. The SIM once inserted into the SIM reader/writer is entirely enclosed by the reader/writer. The SIM reader / writer further comprises a coil antenna for noncontact communication and a chip antenna for Bluetooth communication. As SIM card a dual IC module is preferably used.WO2004/019261 A2 also describes a SIM Holder. The SIM Holder comprises insertion means for inserting a SIM card. The SIM Holder further comprises an antenna coil. The antenna coil is connected to terminals C4 and C8 of a terminal plate of the SIM Holder. The SIM card to be used is a dual interface SIM card.

JP 2002/279377 discloses a card-shaped adapter having a cavity-like receptacle for receiving a SIM card. The adapter also has an antenna coil for connection to terminals 4 and 8 of the SIM card. The antenna coil is based on ISO 14443. Again, the SIM card is a dual interface SIM card.

One drawback of the known approach of using a dual interface subscriber card is that the mobile terminal has to be designed specifically to provide means for contact-less communication, such as an RF-antenna for short range communication. In addition, the user of a subscriber module which is not provided with the dual interface facilities would have to replace the subscriber module, in order to be able to use the benefits of contact-less short range communication.

The problem to be solved by the present invention is thus to provide the possibility of using a common subscribe module and in particular data stored thereon in a system of short range communication without necessitating the mobile terminal to be adapted to the short range communication.

The invention is based on the finding that the problem can be solved by employing an intermediate unit separate to the mobile terminal.

According to the present invention, the problem is solved by an adapter for a subscriber module of a mobile terminal for using the subscriber module outside of the mobile terminal in a short range communication system, wherein the adapter comprises at least one communication unit for short range communication and at least one receptacle for the subscriber module wherein the adapter has the shape of a card and the receptacle for the subscriber module is a cavity in at least one side of the card, and said at least one communication unit serves for NFC communication characterized in that said at least one communication unit comprises a conversion unit for converting the protocol of the subscriber module standard to the NFC standard.

The subscriber module may be a SIM card, a universal SIM card (USIM) or any other universal integrated circuit card (UICC). These subscriber modules are normally used in mobile terminals, such as a mobile phone or any other mobile communication device for authenticating the user to the mobile terminal and for making data and information stored on the subscriber module available within the mobile terminal. According to the present invention, the subscriber module is to be used outside of the mobile terminal. This means that the subscriber module is removed from the mobile terminal, i.e. physically separated from the mobile terminal.

With the inventive adapter, a subscriber module which does not have a contact-less interface can be used for short-range communication systems. This means that no dual interface card has to be provided. Short-range communication systems comprise near field communication systems (NFC) or radio frequency identification systems (RFID). Such short-range communication systems are for example defined in the standards ISO 18092, ECMA 340 and ETSI TS 10290. The near field communication NFC technology is a short-range wireless technology which allows for contact-less provision of payment functionalities, identification functionalities or key functionalities by means of a tag or a target. RFID systems are based on the NFC technology and provide for automatic identification. The identification is based on remotely retrieving data from so called RFID tags by means of transponders. The RFID tags comprise silicone chips and antennas.

By using the inventive adapter, data and information stored on the subscriber module can be used within communication via these kinds of the short-range communication systems. The data for payment, identification and/or key functionalities will be stored on the subscriber module. The adapter furthermore comprises at least one communication unit, which is integrated in the adapter body and may be an integrated circuit on the adapter body or a unit inserted into the adapter body. The communication unit can serve for sending, receiving and/or processing of signals and/or data to and from the adapter and/or to and from the subscriber module within the adapter. Due to the communication units, the adapter can serve as a stand alone communication device which can communicate with other components of short range communication systems, e.g. with an NFC reader.

Finally, the adapter is provided with a receptacle for the subscriber module. The receptacle can have the shape of the subscriber module. Most subscriber modules, such as SIM cards, have a predefined shape only allowing insertion into the mobile device in one orientation. By the provision of a receptacle having the same shape as the subscriber module also the insertion into the adapter will be easy and incorrect insertion of the subscriber module into the adapter can be avoided.

Preferably, at least part of the receptacle is provided with an electronic connection interface to connect with the contact area or contact interface of the subscriber module.

By means of the inventive adapter, it is possible to use common subscriber modules only provided with a contact interface for contact-less communication, in particular short-range communication. While the subscriber module is inserted in a mobile terminal, in particular in a mobile phone, the contact interface of the subscriber module can be used to access and / or transfer data from and to the subscriber module. For example, account information may be stored on the subscriber module and a replenishment of the account can be conducted via the contact interface. Once the subscriber module is inserted into the adapter, a contact-less transfer of data and information from the subscriber module to other devices may be realized. The adapter with a subscriber module inserted therein may, hence, be used for payment processes.

One advantage of the present invention is that no modification to the mobile terminal is necessary in order to be able to provide both contact and contact-less communication to and from the subscriber module. By providing a receptacle at the adapter, a secure connection between the adapter and the subscriber module can be realized and a loss of the subscriber module can be prevented.

Preferably, the receptacle comprises attachment means for detachably affixing the subscriber module to the receptacle of the adapter. The attachment means may be the shape of the receptacle itself. In this case, the receptacle is a slot within the adapter body. Alternatively, a clip or other mechanical attachment means may be provided, in particular for receptacles which are recesses within the adapter body.

According to a preferred embodiment, the receptacle for the subscriber module is connected to at least one of the communication units for transmission of data. The data or information can be transmitted to and/or from the communication unit and the receptacle, respectively. The connection between the receptacle and the communication unit may be realized via printed circuits or wire connections. By providing such connection data transfer within the adapter to the respective units can be realized.

According to one embodiment, the connection between the at least one communication unit and the receptacle is capable of transmission of data according to the single-wire protocol (SWP). The single-wire protocol is a protocol compatible with high-speed protocols due to its one wire connection onto the subscriber module residing within the receptacle. The transmission rate may be 1.5 Mbit/s.

Preferably, at least one of the communication units is a conversion unit for converting data from the subscriber module and/or from at least one other communication unit. The conversion unit can serve for converting the data itself or for converting the protocol according to which the data is being transmitted. The conversion unit is an NFC chipset where conversion of analogue to digital or a protocol conversion can be carried out. In particular, due to the NFC chipset a contact-less reader brought into close vicinity of the adapter can communicate with the subscriber module inserted into the receptacle of the adapter. The reader may for example receive data and / or information stored on the subscriber module. The NFC chipset enables wireless interaction with contact-less chips or readers regardless of the preferred protocol. According to one embodiment, the conversion unit may perform a protocol conversion from the ISO 7816 standard to NFC standard. In this case also legacy subscriber modules, e.g. SIM cards, can be used.

Preferably, the adapter comprises an antenna for short-range communication as one communication unit. By providing the antenna, in particular an RF antenna, at the adapter, the adapter may be used without requiring connection to an additional component, such as a separate antenna unit.

One of the communication units serves for NFC communication to and from the adapter.

The adapter has the shape of a card and the receptacle for the subscriber module is a cavity or recess in at least one side of the card. With this design the usage of the adapter instead of for example a smart card comprising a built-in chip will be possible. The adapter may be used as a contact or contact-less smart card. Due to the communication units provided for short range communication, contact-less usage of the adapter as a smart card is possible. In addition, because the shape of the adapter is that of a card, contact-based usage of the adapter as a smart card is possible. In this case, the adapter may be inserted into reading devices, e.g. into a slot thereof instead of a smart card. By providing an adapter having the shape of such a card, the user experience will not differ between using the inventive adapter and using any other smart card.

The invention will now be described again with reference to the enclosed figure.

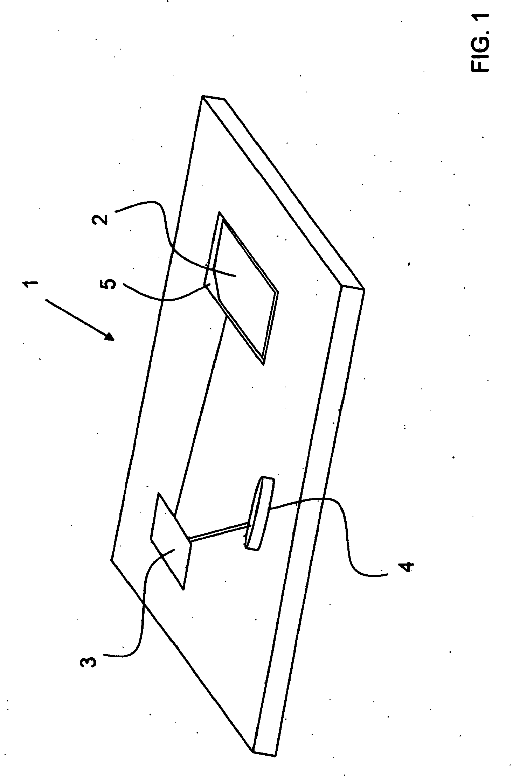

Figure 1 shows a schematic drawing of an embodiment of the adapter according to the present invention.

The adapter 1 is depicted as a card shaped body with a subscriber module 2 inserted into a receptacle 5 provided at one side of the card. In the depicted embodiment the receptacle 5 is provided at the upper face of the card shaped body. The subscriber module 2 is a SIM card having the normal shape of a SIM card, i.e. basically rectangular with one corner cut off. The SIM card 2 contains user credentials. Furthermore, application logic, e.g. in JAVA, may be stored on the SIM card 2. The receptacle 5 for the SIM card 2 is connected to a first communication unit 3. This communication unit 3 is an NFC chipset. Furthermore, a second communication unit 4 is provided at the adapter 1. The second communication unit 4 is an RF antenna. The RF antenna 4 is connected to the NFC chipset 3. The NFC chipset 3 is further connected to the receptacle 5 for the subscriber module 2 via a single wire protocol (SWP) connection. The connection to the NFC chipset 3 at the preferably ends at electronic contact means (not shown) at the receptacle 5. The contact interface of the subscriber module 2 will be in contact with the contact means, once inserted into the receptacle 5 of the adapter 1.

The usage of the inventive adapter 1 will now be explained with reference to the depicted embodiment of the adapter 1.

Once a user registers with a mobile communications network operator, the user will be provided with a subscriber module 2 from the network operator. User credentials as well as application logic will be stored on the subscriber module 2. The application logic may comprise logic for handling account information.

If the user inserts the subscriber module 2, in particular the SIM card, into a mobile terminal, in particular the mobile phone (not shown), data and information can be read from the subscriber module 2 and additional data or information can be stored onto the subscriber module 2. The additional information and data to be stored on the subscriber module 2 may be provided by the user, e.g. via the keys of the mobile phone. Alternatively, the mobile phone may receive data and information via the mobile communication network. The information and data can be received from a server on the communication network according to the communication protocol prevailing within the mobile communication network.

The transmission of information and data received at the mobile phone to the subscriber module 2 will be performed via a contact interface on the subscriber module 2. This contact interface will be in direct contact with electronic contact means within the mobile phone to transmit the data and information onto the subscriber module 2. For example, the account information stored on the subscriber module may be updated by obtaining respective information from a server via the mobile communication network.

If the subscriber module 2 is subsequently removed from the mobile terminal, it can be inserted into the adapter 1 as shown in figure 1. Once inserted into the adapter, the subscriber module 2, in particular the contact interface thereof, will be connected to the NFC chipset via the single wire protocol (SWP) connection. The adapter 1 with the subscriber module 2 inserted therein, may then be brought into the vicinity of e.g. an NFC reader. Information and data stored on the subscriber module 2 can be read, i.e. transmitted to the NFC reader, via the RF antenna 4 of the adapter 1.

The inventive adapter may be used for payment purposes. In addition or alternatively, the adapter can also be used for other functionalities such as ticketing and/or allowing physical access to buildings.

The inventive adapter has several advantages. No modifications to a mobile phone are necessary, in order to be able to use the subscriber module thereof for contact-less communication purposes. With the adapter shown in figure 1, all components of a smartcard are provided. Hence, the adapter with an inserted subscriber module can be used as a smartcard. In addition, the adapter will be easy to manufacture and can thus be provided at low cost. Also legacy SIM cards or other legacy subscriber modules can be used. With the inventive adapter, hence, an increased flexibility for the user is provided.

## Claims

1. Adapter for a subscriber module (2) of a mobile terminal for using the subscriber module (2) outside of the mobile terminal in a short range communication system, wherein the adapter (1) comprises at least one communication unit (3, 4) for short range communication and at least one receptacle (5) for the subscriber module (2), wherein the adapter (1) has the shape of a card and the receptacle (5) for the subscriber module (2) is a cavity in at least one side of the card, and said at least one communication unit (4) serves for NFC communication, **characterized in that** said at least one communication unit (3, 4) comprises a conversion unit (3) for converting the protocol of the subscriber module standard to the NFC standard.

2. Adapter according to claim 1, **characterized in that** the receptacle (5) comprises attachment means for detachably affixing the subscriber module (2) to the receptacle (5) of the adapter (1).

3. Adapter according to any one of claims 1 or 2, **characterized in that** the receptacle (5) for the subscriber module (2) is connected to said at least one communication unit (3, 4) for transmission of data.

4. Adapter according to claim 3, **characterized in that** the connection between the at least one communication unit (3, 4) and the receptacle (5) is capable of transmission of data according to the single wire protocol, SWP.

5. Adapter according to any one of claims 1 to 4, **characterized in that** said at least one communication unit (3, 4) comprises an antenna (4) for short range communication.

6. Adapter according to any one of claims 1 to 5, **characterized in that** said at least one conversion unit (3) is adapted to convert data from the subscriber module (2) and/or from the antenna (4).

7. Adapter according to claims 1 to 6, **characterized in that** the adapter (1) is a smartcard.

## Patentansprüche

1. Adapter für ein Teilnehmermodul (2) eines mobilen Endgerätes für die Verwendung des Telnehmermoduls (2) außerhalb des mobilen Endgerätes in einem Nahbereichskommunikationssystem, wobei der Adapter (1) zumindest eine Kommunikationseinheit (3, 4) für Nahbereichskommunikation und zumindest eine Aufnahme (5) für das Teilnehmermodul (2) umfasst, wobei der Adapter (1) die Form einer Karte besitzt und die Aufnahme (5) für das Teilnehmermodul (2) eine Vertiefung in zumindest einer Seite der Karte ist und die mindestens eine Kommunikationseinheit (4) zur NFC-Kommunikation dient, **dadurch gekennzeichnet, dass** die mindestens eine Kommunikationseinheit (3, 4) eine Umwandlungseinheit (3) zum Umwandeln des Protokolls des Teilnehmermodulstandards in den NFC Standard umfasst.

2. Adapter nach Anspruch 1, **dadurch gekennzeichnet, dass** die Aufnahme (5) Befestigungsmittel zur lösbaren Befestigung des Teilnehmermoduls (2) an der Aufnahme (5) des Adapters (1) umfasst.

3. Adapter nach einem der Ansprüche 1 oder 2, **dadurch gekennzeichnet, dass** die Aufnahme (5) für das Teilnehmermodul (2) mit der mindestens einen Kommunikationseinheit (3, 4) zur Übermittlung von Daten verbunden ist.

4. Adapter nach Anspruch 3, **dadurch gekennzeichnet, dass** die Verbindung zwischen der mindestens einen Kommunikationseinheit (3, 4) und der Aufnahme (5) in der Lage ist Daten gemäß dem Single Wire Protokoll, SWP, zu übermitteln.

5. Adapter nach einem der Ansprüche 1 bis 4, **dadurch gekennzeichnet, dass** die mindestens eine Kommunikationseinheit (3, 4) eine Antenne (4) für Nahbereichskommunikation umfasst.

6. Adapter nach einem der Ansprüche 1 bis 5, **dadurch gekennzeichnet, dass** die mindestens eine Umwandlungseinheit (3) ausgelegt ist um Daten von dem Teilnehmermodul (2) und/oder von der Antenne (4) umzuwandeln.

7. Adapter nach einem der Ansprüche 1 bis 6, **dadurch gekennzeichnet, dass** der Adapter eine Smartkarte ist.

## Revendications

1. Adaptateur pour un module d'abonné (2) d'un terminal mobile pour utiliser le module d'abonné (2) à l'extérieur du terminal mobile dans un système de communication de courte portée, dans lequel l'adaptateur (1) comprend au moins une unité de communication (3, 4) pour communications de courte portée et au moins un logement (5) pour le module d'abonné (2), dans lequel l'adaptateur (1) a la forme d'une carte et le logement (5) pour le module d'abonné (2) est une cavité dans au moins un côté de la carte et ladite au moins une unité de communication (4) sert pour des communications en champ proche NFC, **caractérisé en ce que** ladite au moins une unité de communication (3, 4) comprend une unité de conversion (3) pour convertir le protocole de la norme du module d'abonné vers la norme NFC.

2. Adaptateur selon la revendication 1, **caractérisé en ce que** le logement (5) comprend des moyens de fixation pour fixer de manière amovible le module d'abonné (2) au logement (5) de l'adaptateur (1).

3. Adaptateur selon l'une quelconque des revendications 1 ou 2, **caractérisé en ce que** le logement (5) pour le module d'abonné (2) est connecté à ladite au moins une unité de communication (3, 4) pour la transmission de données.

4. Adaptateur selon la revendication 3, **caractérisé en ce que** la connexion entre l'au moins une unité de communication (3, 4) et le logement (5) est capable d'effectuer une transmission de données selon le protocole à fil unique, SWP.

5. Adaptateur selon l'une quelconque des revendications 1 à 4, **caractérisé en ce que** ladite au moins une unité de communication (3, 4) comprend une antenne (4) pour communications de courte portée.

6. Adaptateur selon l'une quelconque des revendications 1 à 5, **caractérisé en ce que** ladite unité de conversion (3) est adaptée pour convertir des données provenant du module d'abonné (2) et/ou provenant de l'antenne (4).

7. Adaptateur selon les revendications 1 à 6, **caractérisé en ce que** l'adaptateur (1) est une carte à puce.
